# EUROPÄISCHE PATENTSCHRIFT

(11) **EP 1 429 047 B1**
(45) Veröffentlichungstag und Bekanntmachung des Hinweises auf die Patenterteilung: **10.05.2006**
(21) Anmeldenummer: 02027759.6
(22) Anmeldetag: 11.12.2002
(51) Int. Cl.: F16G 1/28, F16G 1/08

(54) **Zahnriemen aus elastomerem Werkstoff und mit Fasermaterial**
Toothed belt made of elastomeric and fibrous materials
Courroie crantée en élastomère et en matériaux fibreux

(43) Veröffentlichungstag der Anmeldung: 16.06.2004
(73) Patentinhaber: ContiTech Antriebssysteme GmbH, 30165 Hannover (DE)
(72) Erfinder: Göser, Hubert, 29451 Dannenberg (DE); Winkler, Thomas, 29451 Dannenberg (DE); Kucharczyk, André, 29499 Gülden (DE)
(74) Vertreter: Finger, Karsten

(56) Entgegenhaltungen:
- EP-A- 0 285 406
- DE-U- 8 325 391
- US-A- 3 418 186
- US-A- 4 126 053
- US-A- 4 798 566
- US-B1- 6 176 799
- US-B1- 6 352 488

## Beschreibung

Die Erfindung betrifft Zahnriemen aus einem im unvernetzten oder nicht gehärteten Zustand gießfähigen elastomeren Werkstoff mit einer in einen elastischen Grundkörper eingebetteten Zugträgerlage und mit Fasermaterial.

Derartige Riemen sind z. B. aus der EP-B-0 285 406 bekannt. Bei den in der EP-B-0 285 406 beschriebenen Riemen handelt es sich um Zahnriemen aus Polyurethan, welches für die Herstellung der Zahnriemen in flüssiger Form in die Riemenform aus dem zahnprägenden Kern und der umschließenden Hülle durch Vakuum injiziert und dann gehärtet wird. Die Riemen enthalten als Fasermaterial hochfestes Faservlies z. B. aus Polyester, welches vor der Aufbringung der Zugträgerlage und der Injektion des Polyurethans in Form von Präpolymeren auf den Formkern aufgewickelt wird. Das Polyurethan wird in der Form durch das Faservlies gedrückt und bettet dieses ein. Die Fasern des Vlieses befinden sich im fertigen Riemen innerhalb der Zähne in nicht gedrückter Form und in den Zahnzwischenräumen direkt auf der Zugträgerlage zum Schutz der Zugträger in gedrückter Form. Auf dem Rücken, der mit Rückenrollen in Kontakt kommen kann, und auf den Zähnen, die mit den Zahnrädern in Kontakt stehen, findet man kein Fasermaterial an der Oberfläche des Riemens, so dass der Rücken und die Zähne nicht ausreichend vor Abrieb geschützt sind.

Aus der US 4,066,732 sind Zahnriemen z. B. aus Polyurethan mit einem Gewebe auf der Zahnoberfläche sowie ein Verfahren zur Herstellung der Riemen beschrieben. Die Herstellung solcher Riemen ist verfahrenstechnisch sehr aufwendig, da das Gewebe vor der Einbringung des flüssigen Polymers in Riemenform am Formkern, insbesondere in den Zähnen, z. B. durch einen temperatur-sensitiven Klebstoff fixiert und genau der Form angepasst werden muss. Ferner weisen Zahnriemen mit einem Gewebe auf der Oberfläche im Vergleich zu Zahnriemen ohne Gewebe eine schlechtere Biegeflexibilität auf.

In der DE 43 18 454 C1 sind Gummizahnriemen aus in der Regel nicht gießfähigem, elastomerem Werkstoff (vulkanisierte Kautschukmischung = Gummi) beschrieben, deren Zahnaußenflächen eine Beschichtung aufweisen, die aus einem faserverstärkten polymeren Werkstoff, bevorzugt einem Elastomer, besteht, dessen Faserkonzentration höher ist als im übrigen elastomeren Grundkörper. Die Fasern in einer zweilagigen Beschichtung sind bevorzugt so ausgerichtet, dass sie ein gitterartiges Verstärkungsnetz schaffen und ragen dabei nicht in den elastischen Grundkörper hinein.

Aus der US 3,418,186 sind Zahnriemen und Verfahren zu deren Herstellung beschrieben, wobei die Zahnriemen eine verbesserte Abriebbeständigkeit aufweisen sollen und kostengünstig hergestellt werden können. Bei dem Verfahren wird auf den Formkern für die Zahnriemenherstellung ein Flockmaterial mit Hilfe einer aufgesprühten Klebstoffschicht aufgebracht. Nach dem Aufsprühen einer zweiten Klebstoffschicht wird die Zugträgerlage aufgewickelt und darauf dann eine Kautschukmischungslage gewickelt oder ein anderes geeignetes Kunststoffmaterial aufgebracht, die bzw. das bei Erwärmung unterhalb der Vulkanisationstemperatur durch die Zugträgerlage und in die Zahnform gedrückt wird. Der fertige Zahnriemen weist dann eine Oberflächenbeschichtung mit Flockmaterial auf.

Neben einer hohen Abriebbeständigkeit und damit verbundener hoher Lebensdauer werden an Zahnriemen der eingangs genannten Art auch viele andere Anforderungen gestellt. So sollen sie eine verminderte Wärme- und Geräuschentwicklung aufweisen und einfach und kostengünstig herstellbar sein. In vielen Bereichen der Industrie, vor allem in der Elektronikindustrie und in Betrieben, in denen mit entzündlichen oder explosionsgefährlichen Stoffen gearbeitet wird, besteht außerdem die Notwendigkeit, störende und unter Umständen gefährliche elektrische Aufladungen z. B. durch Reibung sicher zu vermeiden bzw. sicher abzuleiten.

Um die elektrostatische Aufladung von Zahnriemen zu vermeiden, ist es bekannt, den Gummi oder den gummiähnlichen Kunststoff elektrisch leitfähig auszubilden, indem der verwendeten Kautschuk- oder Kunststoffmischung leitfähige Bestandteile, z. B. Ruß, zugemischt werden. Die Zudosierung derartiger Bestandteile beeinflusst jedoch auch andere Eigenschaften der Zahnriemen, die aus solchen Mischungen hergestellt werden. Es hat sich herausgestellt, dass Zahnriemen aus den Mischungen mit leitfähigen Bestandteilen häufig nicht den an sie gestellten Anforderungen hinsichtlich dynamischer und mechanischer Beanspruchung genügen.

Aus der DE 83 25 391 U 1 ist eine andere Möglichkeit bekannt, Riemen elektrisch leitfähig auszugestalten. Dort ist beschrieben, einen Kraftübertragungsriemen unabhängig von seinem inneren Aufbau und seiner Gestaltung und ohne Rücksicht auf wechselnde dynamische Beanspruchung dauerhaft und zuverlässig elektrisch leitfähig auszubilden, indem der Riemen nachträglich mit einem elektrisch leitfähigen Oberflächenbelag versehen ist. Dieser Oberflächenbelag kann ein Elastomerlack auf der Basis von Polyurethan sein, der elektrisch leitfähige Teilchen, z. B. Ruß, in feiner Verteilung enthält. Der Polyurethanlack kann dabei entweder ein Einkomponentensystem oder aber ein Polyether- oder Polyester-Polyurethanlack in einem Zweikomponentensystem sein. Als Zweikomponentensystem bezeichnet der Fachmann Systeme, deren Bindemittel aus Polyol und Polyisocyanat bestehen; Einkomponentensystem sind solche, deren Bindemittel Polyisocyanate sind, die mit Luftfeuchtigkeit trocknen und härten. Die in der DE 83 25 391 U 1 beschriebenen Riemen mit dem elektrisch leitfähigen Oberflächenbelag weisen aber hinsichtlich der Verschleißfestigkeit des Oberflächenbelages und des Riemens selbst oft noch nicht das gewünschte Niveau auf und müssen mit dem Lack in einem zusätzlichen Verfahrensschritt nachbehandelt werden, was aufwendig ist und zu Geometrieveränderungen im Riemenprofil führen kann.

Der Erfindung liegt nun die Aufgabe zu Grunde, Zahnriemen bereitzustellen, die antistatische Eigenschaften und eine hohe Lebensdauer durch hohe Abriebbeständigkeit aufweisen und die verfahrenstechnisch einfach und kostengünstig hergestellt werden können.

Gelöst wird die Aufgabe gemäß dem Anspruch 1 dadurch, dass der Zahnriemen eine abriebfeste, gegebenenfalls mehrlagige Oberflächenschicht auf den Zähnen und/oder auf dem Rücken aufweist, die zumindest einen Inhaltsstoff, der die elektrostatische Aufladung verhindert, und Kurzfasern mit einer Länge von weniger als 30 % der Zahnteilung enthält, wobei die Kurzfasern zum Teil in den elastischen Grundkörper hineinragen.

Die Zahnteilung eines Zahnriemens ist der lineare Abstand zwischen zwei benachbarten Zähnen (Zahnmitten) in Höhe der biegeneutralen Wirklinie.
Der Grundgedanke der Erfindung ist darin zu sehen, dass die Zähne und/oder der Rücken des Zahnriemens, die bzw. der durch den Kontakt mit Zahnrädern und Rückenrollen dem Verschleiß ausgesetzt sind, durch die faserhaltige Oberflächenschicht vor Abrieb geschützt sind. Die oftmals teuren Fasern, die z. B. eine Länge von 0,1 bis 10 mm aufweisen können, befinden sich nur an den beanspruchten Stellen, so dass die dynamischen und mechanischen Eigenschaften, die durch den elastischen Grundkörper bestimmt werden, kaum negativ beeinflusst werden. Da dem Werkstoff des elastischen Grundkörpers keine Fasern beigemengt werden, wird das Verarbeitungsverhalten des Werkstoffes nicht verschlechtert. Im Vergleich zu einem Zahnriemen mit Gewebe ist der erfindungsgemäße Riemen biegeflexibler.

Außerdem wurde festgestellt, dass die Riemen einen geringeren Reibbeiwert als Zahnriemen ohne Oberflächenschicht aufweisen, was sich in einer reduzierten Wärmeentwicklung und Verbesserung des Geräuschverhaltens widerspiegelt.

Gleichzeitig weist der Zahnriemen durch die Inhaltsstoffe, die eine elektrostatische Aufladung verhindern, antistatische Eigenschaften auf. Die erfindungsgemäßen Zahnriemen müssen daher nicht nachträglich mit einem Antistatiklack versehen werden.

Der Zahnriemen lässt sich einfach und wirtschaftlich herstellen, indem z. B. der Formkern und/oder die äußere, den Kern umhüllende Form mit Fasern analog dem Verfahren aus der US 3,418,186 mit Fasern versehen werden, z. B. durch Beflockung, und der verwendete Klebstoff zumindest einen Inhaltsstoff enthält, der die elektrostatische Aufladung verhindert. Der Klebstoff kann dabei vor und/oder nach der Aufbringung der Fasern auf die Form z. B. durch Sprühen, Streichen oder Tauchen aufgebracht werden. Es können auch mehrere Lagen an Fasern und Klebstoff, die die Oberflächenschicht bilden, in unterschiedlichen Reihenfolgen aufgebracht werden, wobei für jede Lage auch unterschiedliche Fasern und unterschiedliche Klebstoffe verwendet werden können. Nachdem der Formkern und/oder die den Kern umhüllende Form (Formmantel) mit den Fasern und dem Klebstoff versehen worden sind, wird auf den Kern die Zugträgerlage aufgespult und werden Kern und Mantel in herkömmlicher Weise zusammengebracht und mit dem gießfähigen elastomeren Werkstoff, der den elastischen Grundkörper bildet, gefüllt. Bei dem gießfähigen Werkstoff kann es sich z. B. um niedrigviskose Kautschukmischungen oder thermoplastische Elastomere handeln, die sich nach Aushärtung oder Vernetzung im Gebrauchstemperaturbereich gummielastisch verhalten. Nach Aushärtung oder Vernetzung kann ein Riemenwickel entnommen werden, der in Zahnriemen der gewünschten Breite geschnitten wird.

Die Oberflächenschicht kann auf verschiedenen polymeren Werkstoffen basieren. Gemäß einer vorteilhaften Weiterbildung der Erfindung basiert die Oberflächenschicht jedoch auf Polyurethan. Die Schicht verbindet sich gut mit dem Material des Grundkörpers und die Fasern werden fest gebunden. Zur Erzeugung der Oberflächenschicht auf Polyurethanbasis wird als Klebstoff ein zu Polyurethan vernetzendes und aushärtendes System aus Polyol und Polyisocyanat verwendet, dem die die elektrostatische Aufladung verhindernden Inhaltsstoffes zugemischt sind. Die Menge an dem die elektrostatische Aufladung verhindernden Inhaltsstoff wird bevorzugt so bemessen, dass die Schicht im ausgehärteten Zustand 5 bis 15 Gew.-% des Inhaltsstoffes aufweist.

Als Kurzfasern können Fasern aus Baumwolle, Polyester, Polypropylen oder aus anderen in der Riemenfertigung gebräuchlichen Materialien verwendet werden. Bevorzugt werden allerdings Polyamidfasern eingesetzt, mit denen eine besonders gute Reibwertreduzierung und ein besonders hoher Abriebwiderstand erreicht werden können.

Um das dynamische und mechanische Verhalten des Zahnriemens in möglichst geringem Maße zu beeinflussen, hat es sich als vorteilhaft erwiesen, dass die Oberflächenschicht auf den Zähnen eine Schichtdicke von 1 bis 20 % der Zahnteilung aufweist.

Die Fasern weisen bevorzugt eine Länge von 5 bis 30 % der Zahnteilung auf. Diese Faserlängen gewährleisten, dass die guten Eigenschaften, die durch die Oberflächenschicht hervorgerufen werden, über die gesamte Riemenlebensdauer erhalten bleiben, ohne dass zu lange Fasern die Riemenstabilität und das mechanische Verhalten des Riemens negativ beeinflussen.

Die Oberflächenschicht kann neben den Fasern und den die elektrostatische Aufladung verhindernden Inhaltsstoffen noch weitere Zuschlagstoffe, wie z. B. Pulver aus Polytetrafluorethylen zur weiteren Verringerung des Reibbeiwertes, enthalten.

Als Inhaltsstoffe, die die elektrostatische Aufladung verhindern, können alle dem Fachmann bekannten elektrisch leitfähigen Stoffe, wie z. B. leitfähige Metallpulver, eingesetzt werden. Bevorzugt werden als Inhaltsstoffe elektrisch leitfähige pulverförmige Partikel eingesetzt. Besonders bevorzugt wird elektrisch leitfähiger, amorpher Kohlenstoff (Ruß) eingesetzt, der in der Oberflächenschicht in feinster Verteilung vorliegt. Die Verwendung von amorphem Kohlenstoff bietet die Vorteile, dass er zusätzlich antimagnetisch ist, das System als UV-Schutz schwarz einfärbt, in großen Mengen preiswert verfügbar ist und sich einfach z. B. in ein zu Polyurethan vernetzendes System einmischen lässt.

Die Oberflächenschicht und der elastische Grundkörper des Zahnriemens können vom Material her aufeinander abgestimmt sein. So hat es sich als besonders vorteilhaft erwiesen, wenn die Oberflächenschicht und der Grundkörper im Wesentlichen auf Polyurethan basieren. Auf diese Weise kann eine optimale Bindung zwischen Oberflächenschicht und Grundkörper gewährleistet werden.

Es ist möglich, dass die Oberflächenbeschichtung sich z. B. durch Ruß als Inhaltsstoff farblich vom Grundkörper unterscheidet. Diese Ausführungsform bietet den Vorteil, dass die Oberflächenbeschichtung als Verschleißindikator dienen kann.

Im Folgenden wird die Erfindung anhand eines Ausführungsbeispiels im Zusammenhang mit der nachstehenden Figur näher erläutert, ohne jedoch auf dieses Beispiel beschränkt zu sein.

Die einzige Figur zeigt schematisch den Schnitt eines erfindungsgemäßen Zahnriemens in Umlaufrichtung.

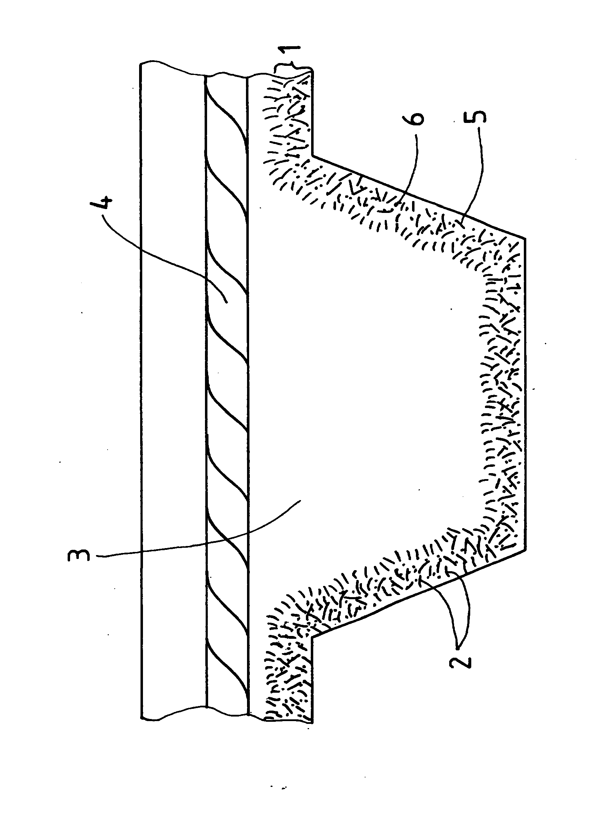

Der in Figur 1 dargestellte Zahnriemen weist auf den Zähnen eine Oberflächenschicht 1 aus Polyurethan 5 auf, die Ruß 6 und Polyamidfasern 2 mit einer Faserlänge von 0,7 bis 1,3 mm enthält. Die Fasern 2 reichen in den elastischen Grundkörper 3, der ebenfalls aus Polyurethan besteht, hinein. Ferner weist der Riemen eine Zugträgerlage 4 auf.

Für die Herstellung des Riemens wurde die Form mit der folgenden zu Polyurethan vernetzenden Zusammensetzung versehen:
2 Gew.-% Prepolymer aus Toluylendiisocyanat und Polyetherpolyol mit einem NCO-Gehalt des Prepolymers von 4,3 Gew.-%,
4 Gew.-% modifiziertes Polyisocyanat mit einem NCO-Gehalt von 18 Gew.-% auf der Basis von Hexamethylendiisocyanat,
8,3 Gew.-% Polyesterpolyol,
1,3 Gew.-% Ruß und
82,4 Gew.-% organische Lösungsmittel.

Anschließend wurde vor dem Aushärten der Zusammensetzung mit Polyamid-Kurzfasern beflockt. Je nach Zahnteilung können weitere Lagen der Zusammensetzung und der Fasern aufgebracht werden. Im Anschluss wurde auf den Kern die Zugträgerlage gespult. Nach dem Einbringen des beflockten und bespulten Formkerns in den Formmantel wurde der Werkstoff, in diesem Fall Polyurethan in Form von Prepolymeren und Vernetzer, für den elastischen Grundkörper in den Zwischenraum zwischen Kern und Mantel gegossen. Nach Vernetzung oder Aushärtung wurde der Riemenwickel entnommen und in die gewünschte Breite geschnitten.

Der erfindungsgegmäße Zahnriemen zeichnete sich durch eine besonders hohe Lebensdauer, einen geringen Reibbeiwert und antistatische Eigenschaften aus.

## Patentansprüche

1. Zahnriemen aus einem im unvernetzten oder nicht gehärteten Zustand gießfähigen elastomeren Werkstoff mit einer in einen elastischen Grundkörper (3) eingebetteten Zugträgerlage (4) und mit Fasermaterial (2),
**dadurch gekennzeichnet, dass**
der Zahnriemen eine abriebfeste, gegebenenfalls mehrlagige Oberflächenschicht (1) auf den Zähnen und/oder auf dem Rücken aufweist, die zumindest einen Inhaltsstoff (6), der die elektrostatische Aufladung verhindert, und Kurzfasern (2) mit einer Länge von weniger als 30 % der Zahnteilung enthält, wobei die Kurzfasern (2) zum Teil in den elastischen Grundkörper (3) hineinragen.

2. Zahnriemen nach Anspruch 1, **dadurch gekennzeichnet, dass** die Oberflächenschicht (1) auf Polyurethan (5) basiert.

3. Zahnriemen nach einem der Ansprüche 1 oder 2, **dadurch gekennzeichnet, dass** die Fasern (2) Polyamidfasern sind.

4. Zahnriemen nach zumindest einem der vorhergehenden Ansprüche, **dadurch gekennzeichnet, dass** die Oberflächenschicht (1) auf den Zähnen eine Schichtdicke von 1 bis 20 % der Zahnteilung aufweist.

5. Zahnriemen nach zumindest einem der vorhergehenden Ansprüche, **dadurch gekennzeichnet, dass** die Fasern (2) eine Länge von 5 bis 30 % der Zahnteilung aufweisen.

6. Zahnriemen nach zumindest einem der vorhergehenden Ansprüche, **dadurch gekennzeichnet, dass** der Inhaltsstoff (6) elektrisch leitfähiger, amorpher Kohlenstoff in feinster Verteilung ist.

7. Zahnriemen nach zumindest einem der Ansprüche 2 bis 6, **dadurch gekennzeichnet, dass** der elastische Grundkörper (3) auf Polyurethan basiert.

## Claims

1. Toothed belt made of an elastomeric material which is pourable in the uncrosslinked or nonhardened state, with a tensionable layer (4) embedded in an elastic base member (3), and with fibrous material (2), **characterized in that** the toothed belt has a wear-resistant, possibly multiple, surface layer (1) on the teeth and/or on the back, which contains at least one component (6) that prevents electrostatic charging, and short fibres (2) with a length of less than 30% of the tooth pitch, the short fibres (2) protruding partly into the elastic base member (3).

2. Toothed belt according to Claim 1, **characterized in that** the surface layer (1) is based on polyurethane (5).

3. Toothed belt according to either of Claims 1 and 2, **characterized in that** the fibres (2) are nylon fibres.

4. Toothed belt according to at least one of the preceding claims, **characterized in that** the surface layer (1) on the teeth has a layer thickness of 1 to 20% of the tooth pitch.

5. Toothed belt according to at least one of the preceding claims, **characterized in that** the fibres (2) have a length of 5 to 30% of the tooth pitch.

6. Toothed belt according to at least one of the preceding claims, **characterized in that** the component (6) is electrically conductive, extremely finely divided, amorphous carbon.

7. Toothed belt according to at least one of Claims 2 to 6, **characterized in that** the elastic base member (3) is based on polyurethane.

## Revendications

1. Courroie dentée constituée d'un matériau élastomère coulant dans l'état non réticulé ou non durci avec une couche support de traction (4) noyée dans un corps de base élastique (3) et avec un matériau fibreux (2),
**caractérisée en ce que**
la courroie dentée présente une couche superficielle (1) résistant à l'abrasion, éventuellement multicouche, sur les dents et/ou sur le dos, qui contient au moins un composant (6) qui empêche une charge électrostatique, et des fibres courtes (2) ayant une longueur inférieure à 30% de la division des dents, les fibres courtes (2) pénétrant en partie dans le corps de base élastique (3).

2. Courroie dentée selon la revendication 1,
**caractérisée en ce que** la couche superficielle (1) est à base de polyuréthane (5).

3. Courroie dentée selon l'une quelconque des revendications 1 ou 2, **caractérisée en ce que** les fibres (2) sont des fibres de polyamide.

4. Courroie dentée selon au moins l'une quelconque des revendications précédentes, **caractérisée en ce que** la couche superficielle (1) sur les dents présente une épaisseur de couche de 1 à 20% de la division des dents.

5. Courroie dentée selon au moins l'une quelconque des revendications précédentes, **caractérisée en ce que** les fibres (2) présentent une longueur de 5 à 30% de la division des dents.

6. Courroie dentée selon au moins l'une quelconque des revendications précédentes, **caractérisée en ce que** le composant (6) est un carbone amorphe conducteur de l'électricité en répartition finement divisée.

7. Courroie dentée selon au moins l'une quelconque des revendications 2 à 6, **caractérisée en ce que** le corps de base élastique (3) est à base de polyuréthane.
